# EUROPÄISCHE PATENTANMELDUNG

(11) **EP 4 471 116 A1**
(43) Veröffentlichungstag der Anmeldung: **04.12.2024**
(21) Anmeldenummer: 24161611.9
(22) Anmeldetag: 05.03.2024
(51) Int. Cl.: C12C 7/22, C12C 7/26, C12C 13/08

(54) **BRAUANLAGE MIT EINER HEISSWASSER-SPEICHEREINRICHTUNG**

(30) Priorität: 06.03.2023 DE 102023105429
(71) Anmelder: Banke GmbH, 84416 Taufkirchen (Vils) (DE)
(72) Erfinder: Pfister, Stefan, 91330 Eggolsheim (DE)
(74) Vertreter: Schlimme, Wolfram

(57) **Zusammenfassung**

Bei einer Brauanlage mit einer einen Hochtemperaturbereich (2') und einen Niedertemperaturbereich (2") aufweisenden Heißwasser-Speichereinrichtung (10'), die zumindest einen Hochtemperatur-Wassereinlass (20, 21A, 22), zumindest einen Hochtemperatur-Wasserauslass (23A), zumindest einen Niedertemperatur-Wassereinlass (24) und zumindest einen Niedertemperatur-Wasserauslass (25) aufweist, mit einem Maischgefäß (3), einem mit dem Maischgefäß (3) über eine Maischeleitung (34) fluidverbundenen Läuterbottich (4) oder Maischefilter, einer Würzepfanne (5), die einen Läuterwürzeeinlass (50), einen Würzeauslass (51) und einen Brüdenkondensator (6) mit einem Niedertemperatur-Wasseranschluss (60) und einem Hochtemperatur-Wasseranschluss (61) aufweist, wobei der Läuterwürzeeinlass (50) über eine Läuterwürzeleitung (52) mittelbar oder unmittelbar mit dem Läuterbottich (4) oder dem Maischefilter fluidverbunden ist, wobei der Niedertemperatur-Wasserauslass (25) der Heißwasser-Speichereinrichtung (10') mit dem Niedertemperatur-Wasseranschluss (60) des Brüdenkondensators (6) und der Hochtemperatur-Wassereinlass (21) der Heißwasser-Speichereinrichtung (10') mit dem Hochtemperatur-Wasseranschluss (61) des Brüdenkondensators (6) in Fluidverbindung stehen, ist vorgesehen, dass die Heißwasser-Speichereinrichtung (10') zumindest einen ersten Heißwasser-Speicherbehälter (2A), der den Hochtemperaturbereich (2') aufweist oder bildet, und zumindest einen zweiten Heißwasser-Speicherbehälter (2B) umfasst, der den Niedertemperaturbereich (2") aufweist oder bildet, und dass die als Anordnung von zwei oder mehr Heißwasser-Speicherbehältern (2A, 2B) ausgeführte Heißwasser-Speichereinrichtung (10') über eine Frischwasser-Zuleitung (70) mit einem Frischwasservorrat (7') in Fluidverbindung steht und dass der Hochtemperatur-Wasserauslass (23) der Heißwasser-Speichereinrichtung (10') über eine Maischwasserleitung (32) mit einem Heißwassereinlass (33) des Maischgefäßes (3) in Fluidverbindung steht.

## Beschreibung

### TECHNISCHES GEBIET

Die vorliegende Erfindung betrifft Brauanlagen mit einer einen Hochtemperaturbereich und einen Niedertemperaturbereich aufweisenden Heißwasser-Speichereinrichtung gemäß dem jeweiligen Oberbegriff der Patentansprüche 1, 2 und 3. Diese Heißwasser-Speichereinrichtung ist als Anordnung von zwei oder mehr Heißwasser-Speicherbehältern ausgeführt, die jeweils einen anderen Temperaturbereich abdecken.

### HINTERGRUND DER ERFINDUNG

Dem Energiemanagement in Brauanlagen kommt im Zeichen steigender Energiekosten eine zunehmend wichtiger werdende Bedeutung zu. Der überwiegende Teil der für einen Brauprozess in einer Brauanlage benötigten Energie ist thermische Energie. Die Rückgewinnung von thermischer Energie aus Abwärme des Brauprozesses, beispielsweise beim Herabkühlen von Würze, und die Wiederverwendung dieser Energie zum Aufheizen von Prozessflüssigkeit, beispielsweise von Läuterwürze vor dem Einleiten in die Würzepfanne, ist hinreichend bekannt und wird seit Langem in der Praxis eingesetzt. Umso wichtiger sind ständige Bestrebungen, die Wärmeverluste bei den diversen Wärmetauschprozessen zu minimieren und die thermische Energieeffizienz von Brauanlagen zu verbessern. Üblicherweise werden dazu Wärmetauschkreisläufe vorgesehen, die vom Strom der Brauprozessflüssigkeit, beispielsweise der Würze oder des Bieres, getrennt sind.

### STAND DER TECHNIK

Aus der EP 2 516 614 B1 sind eine Vorrichtung und ein Verfahren zur Rückgewinnung von Energie in einer Bierbrauerei bekannt, wobei ein vom Prozessfluidstrom separater Wärmetauschkreislauf vorgesehen ist. Der Wärmetauschkreislauf enthält ein Wärmetransportfluid, beispielsweise Wasser, und bildet ein geschlossenes Rohrleitungssystem mit Wärmetauschern zur Wärmeübertragung zwischen dem Prozessfluid und dem Wärmetransportfluid sowie mit einem den Energiespeicher bildenden Speicherbehälter für das Wärmetransportfluid, der als Schichtspeicher ausgebildet ist.

Die aus der Würzekochung und der Würzekühlung rückgewonnene thermische Energie wird im Energiespeicher gesammelt. Die bei der Würzekochung beispielsweise über einen Pfannendunstkondensator rückgewonnene thermische Energie im heißeren Kopfraum des Schichtspeichers wird wieder zur Läuterwürze-Erhitzung verwendet. Die aus der Würzekühlung mittels eines Würzekühlers rückgewonnene thermische Energie kann zur indirekten Beheizung der Maische verwendet werden.

Das Heißwasser aus dem Energiespeicher wird dabei in einen Heizungswärmetauscher eines Maischgefäßes eingeleitet, wodurch die Maische im Maischgefäß erhitzt wird. Nachteilig ist dabei, dass aufgrund der relativ niedrigen Heizmitteltemperaturen die Heizflächen des Heizungswärmetauschers sehr groß gewählt werden müssen, um die erforderliche thermische Energie aus dem im geschlossenen Wärmetauschsystem fließenden Wärmetransportfluid in die Maische übertragen zu können. Dadurch entsteht ein großer Flächenbedarf für den Heizungswärmetauscher in oder am Maischgefäß. Insbesondere bei der Nachrüstung und Umrüstung von Bestandsanlagen sind die Heizflächen beschränkt und die Maischgefäße müssen in den meisten Fällen kostenaufwendig ausgetauscht werden.

### DARSTELLUNG DER ERFINDUNG

Aufgabe der vorliegenden Erfindung ist es daher, eine gattungsgemäße, verbesserte Brauanlage anzugeben, die platzsparender baut und die ohne größeren Austausch von Kesseln oder Behältern und unter Verwendung vorhandener Anlagenkomponenten zur thermischen Effizienzsteigerung ertüchtigt ist oder werden kann.

Diese Aufgabe wird gemäß einer ersten Ausführungsform der Erfindung gelöst durch eine Brauanlage mit den Merkmalen des Anspruchs 1.

Eine erste Variante einer erfindungsgemäßen Brauanlage mit einer einen Hochtemperaturbereich und einen Niedertemperaturbereich aufweisenden Heißwasser-Speichereinrichtung, die zumindest einen Hochtemperatur-Wassereinlass, zumindest einen Hochtemperatur-Wasserauslass, zumindest einen Niedertemperatur-Wassereinlass und zumindest einen Niedertemperatur-Wasserauslass aufweist, mit einem Maischgefäß, einem mit dem Maischgefäß über eine Maischeleitung fluidverbundenen Läuterbottich oder Maischefilter, einer Würzepfanne, die einen Läuterwürzeeinlass, einen Würzeauslass und einen Brüdenkondensator mit einem Niedertemperatur-Wasseranschluss und einem Hochtemperatur-Wasseranschluss aufweist, wobei der Läuterwürzeeinlass über eine Läuterwürzeleitung mittelbar oder unmittelbar mit dem Läuterbottich oder dem Maischefilter fluidverbunden ist, wobei der Niedertemperatur-Wasserauslass der Heißwasser-Speichereinrichtung mit dem Niedertemperatur-Wasseranschluss des Brüdenkondensators und der Hochtemperatur-Wassereinlass der Heißwasser-Speichereinrichtung mit dem Hochtemperatur-Wasseranschluss des Brüdenkondensators in Fluidverbindung stehen, zeichnet sich dadurch aus, dass die Heißwasser-Speichereinrichtung zumindest einen ersten Heißwasser-Speicherbehälter, der den Hochtemperaturbereich aufweist oder bildet, und zumindest einen zweiten Heißwasser-Speicherbehälter umfasst, der den Niedertemperaturbereich aufweist oder bildet und dass die als Anordnung von zwei oder mehr Heißwasser-Speicherbehältern ausgeführte Heißwasser-Speichereinrichtung über eine Frischwasser-Zuleitung mit einem Frischwasservorrat in Fluidverbindung steht und dass der Hochtemperatur-Wasserauslass der Heißwasser-Speichereinrichtung über eine Maischwasserleitung mit einem Heißwassereinlass des Maischgefäßes in Fluidverbindung steht.

Gemäß einer zweiten Ausführungsform der Erfindung wird die Aufgabe gelöst durch eine Brauanlage mit den Merkmalen des Anspruchs 2.

Diese alternative zweite Variante der Brauanlage mit einer einen Hochtemperaturbereich und einen Niedertemperaturbereich aufweisenden Heißwasser-Speichereinrichtung, die zumindest einen Hochtemperatur-Wassereinlass, zumindest einen Hochtemperatur-Wasserauslass, zumindest einen Niedertemperatur-Wassereinlass und zumindest einen Niedertemperatur-Wasserauslass aufweist, mit einem Maischgefäß, einem mit dem Maischgefäß über eine Maischeleitung fluidverbundenen Läuterbottich oder Maischefilter, einer Würzepfanne, die einen Läuterwürzeeinlass, einen Würzeauslass und einen Brüdenkondensator mit einem Niedertemperatur-Wasseranschluss und einem Hochtemperatur-Wasseranschluss aufweist, wobei der Läuterwürzeeinlass über eine Läuterwürzeleitung mittelbar oder unmittelbar mit dem Läuterbottich oder dem Maischefilter fluidverbunden ist, wobei der Würzeauslass mittelbar oder unmittelbar mit einem Würzekühler fluidverbunden ist, dem über eine äußere Zuflussleitung Kaltwasser zu einem Kaltwassereinlauf zugeführt wird, das im Würzekühler erhitzt wird, und der einen über eine innere Zuflussleitung mit dem Hochtemperatur-Wassereinlass der Heißwasser-Speichereinrichtung fluidverbundenen Heißwasserauslauf zum Austritt des erhitzten Wassers aufweist, zeichnet sich dadurch aus, dass die Heißwasser-Speichereinrichtung zumindest einen ersten Heißwasser-Speicherbehälter, der den Hochtemperaturbereich aufweist oder bildet, und zumindest einen zweiten Heißwasser-Speicherbehälter umfasst, der den Niedertemperaturbereich aufweist oder bildet und dass die äußere Zuflussleitung mit dem Frischwasservorrat fluidverbunden ist und dass die äußere Zuflussleitung und die innere Zuflussleitung die Frischwasser-Zuleitung der als Anordnung von zwei oder mehr Heißwasser-Speicherbehältern ausgeführten Heißwasser-Speichereinrichtung bilden.

Gemäß einer dritten Ausführungsform der Erfindung wird die Aufgabe gelöst durch eine Brauanlage mit den Merkmalen des Anspruchs 3.

Eine alternative dritte Variante einer erfindungsgemäßen Brauanlage mit einer einen Hochtemperaturbereich und einen Niedertemperaturbereich aufweisenden Heißwasser-Speichereinrichtung, die zumindest einen Hochtemperatur-Wassereinlass, zumindest einen Hochtemperatur-Wasserauslass, zumindest einen Niedertemperatur-Wassereinlass und zumindest einen Niedertemperatur-Wasserauslass aufweist, mit einem Maischgefäß, einem mit dem Maischgefäß über eine Maischeleitung fluidverbundenen Läuterbottich oder Maischefilter, einer Würzepfanne, die einen Läuterwürzeeinlass, einen Würzeauslass und einen Brüdenkondensator mit einem Niedertemperatur-Wasseranschluss und einem Hochtemperatur-Wasseranschluss aufweist, wobei der Läuterwürzeeinlass über eine Läuterwürzeleitung mittelbar oder unmittelbar mit dem Läuterbottich oder dem Maischefilter fluidverbunden ist, wobei der Niedertemperatur-Wasserauslass der Heißwasser-Speichereinrichtung mit dem Niedertemperatur-Wasseranschluss des Brüdenkondensators und der Hochtemperatur-Wassereinlass der Heißwasser-Speichereinrichtung mit dem Hochtemperatur-Wasseranschluss des Brüdenkondensators in Fluidverbindung stehen, wobei der Würzeauslass mittelbar oder unmittelbar mit einem Würzekühler fluidverbunden ist, dem über eine äußere Zuflussleitung Kaltwasser zu einem Kaltwassereinlauf zugeführt wird, das im Würzekühler erhitzt wird, und der einen über eine innere Zuflussleitung mit dem Hochtemperatur-Wassereinlass der Heißwasser-Speichereinrichtung fluidverbundenen Heißwasserauslauf zum Austritt des erhitzten Wassers aufweist, zeichnet sich dadurch aus, dass die Heißwasser-Speichereinrichtung zumindest einen ersten Heißwasser-Speicherbehälter, der den Hochtemperaturbereich aufweist oder bildet, und zumindest einen zweiten Heißwasser-Speicherbehälter umfasst, der den Niedertemperaturbereich aufweist oder bildet, dass die als Anordnung von zwei oder mehr Heißwasser-Speicherbehältern ausgeführte Heißwasser-Speichereinrichtung über eine Frischwasser-Zuleitung mit einem Frischwasservorrat in Fluidverbindung steht und dass der Hochtemperatur-Wasserauslass der Heißwasser-Speichereinrichtung über eine Maischwasserleitung mit einem Heißwassereinlass des Maischgefäßes in Fluidverbindung steht und dass die äußere Zuflussleitung mit dem Frischwasservorrat fluidverbunden ist und dass die äußere Zuflussleitung und die innere Zuflussleitung die Frischwasser-Zuleitung der Heißwasser-Speichereinrichtung bilden.

### VORTEILE

Allen drei Varianten der erfindungsgemäßen Brauanlage gemeinsam ist die vorteilhafte Verwendung von Frischwasser als Wärmetransportmedium in einem offenen Wärmetransportsystem zum Austausch von thermischer Energie zwischen den einzelnen Anlagenkomponenten. Das aus einem Frischwassertank oder einer ausreichend dimensionierten Frischwasserleitung, also aus dem Frischwasservorrat, der Brauanlage zugeführte Wasser wird entweder im Brüdenkondensator (Variante gemäß Anspruch 1) oder im Würzekühler (Variante gemäß Anspruch 2) oder im Brüdenkondensator und im Würzekühler (Variante gemäß Anspruch 3) erhitzt und in der Heißwasser-Speichereinrichtung als Pufferspeicher für die thermische Energie zwischengespeichert. Von dort wird es als heißes Prozessfluid (Brauwasser) in das Maischgefäß, beispielsweise in einen Maischbottich, in die dort vorhandene Maische eingeleitet, wo es sich mit der Maische schnell vermischt und diese unmittelbar aufheizt - im Gegenteil zu einer mittelbaren Aufheizung mittels eines Wärmetauschers wie im Stand der Technik. Diese direkte Aufheizung der Maische erfolgt schneller und reaktionsärmer, da die direkte Vermischung quasi unmittelbar zu einer gleichmäßigen Temperaturverteilung führt. Dieser erfindungsgemäße Prozess kann auch als Zubrühen von Prozessfluid (Brauwasser) beim Maischen bezeichnet werden. Die Zieltemperatur in der Maische wird dabei durch die Menge des aus der Heißwasser-Speichereinrichtung in das Maischgefäß eingeleiteten heißen frischen Brauwassers sowie von dessen Temperatur und von der Menge der im Maischgefäß anfänglich enthaltenen Maische und von deren Ausgangstemperatur bestimmt.

Durch die erfindungsgemäße kombinierte Energierückgewinnung aus der Würzekochung und der Würzekühlung (gemäß Anspruch 3) auf ähnlich hohem Temperaturniveau kann die Verdampfungsziffer weiter abgesenkt werden, als dies bei Anlagen mit einem in einem gesonderten Wärmerückgewinnungskreislauf enthaltenen Energiespeicher möglich ist, wo die Würzekochung und die Läuterwürze-Erhitzung im Gleichgewicht stehen müssen. Die Verdampfungsziffer gibt den Prozentsatz der pro Stunde, bezogen auf die Menge der durch die Würzekochung erhaltenen Ausschlagwürze als Basiswert (100 %), verdampften Wassermenge an. Dieses Gleichgewicht der Energiemengen von Würzekochung und Läuterwürze-Erhitzung wird im Stand der Technik bei einem vom Brauflüssigkeitsstrom separatem Wärmerückgewinnungskreislauf nur mit einer Verdampfungsziffer von ca. 4 bis 4,5 % erreicht. Technologisch sind allerdings nur deutlich niedrigere Verdampfungsziffern (ca. 2 bis 3,5 %) erforderlich. Die erfindungsgemäße Lösung mit der Verwendung von Frischwasser zur Wärmerückgewinnung aus Würzekochung und Würzekühlung ermöglicht bei Heißwasserüberschuss der Brauerei eine Absenkung der Verdampfungsziffer und damit eine Einsparung an Primärenergiebedarf gegenüber dem Stand der Technik.

Besonders vorteilhaft ist es, wenn die Einleitung des heißen frischen Brauwassers aus der Heißwasser-Speichereinrichtung in das Maischgefäß im Bereich des Maischgefäßbodens, also von unten in die vorhandene Maische, erfolgt. Die dadurch aufgrund es Aufsteigens des (leichteren) heißen Brauwassers im Vergleich zur kühleren und dickflüssigeren Maische in der Maische entstehende turbulente Strömung sorgt für eine schnelle Vermischung und damit für ein schnelles Erreichen einer gleichmäßigen Temperaturverteilung in der verdünnten Maische. Besonders vorteilhaft ist eine Leitungsanordnung für die Einleitung des heißen Brauwassers in das Maischgefäß in dessen äußerem Bodenbereich, da hier die Turbulenz von im Maischbehälter eventuell vorhandenen Maischrührorganen am höchsten ist und damit schnellstes Vermischen erzielt wird. Ideal ist, wenn das Rührwerk eines solchen Maischrührorgans mit Bewehrungen ausgestattet ist, da diese das Vermischen nochmals stark beschleunigen.

Weitere bevorzugte und vorteilhafte Ausgestaltungsmerkmale der erfindungsgemäßen Brauanlagen sind Gegenstand der Unteransprüche 4 bis 10.

Vorzugsweise liegt die Temperatur von aus dem Hochtemperatur-Wasseranschluss des Brüdenkondensators austretendem Wasser während des Braubetriebs der Brauanlage im Bereich von 95°C bis 99°C, vorzugsweise zwischen 96°C und 99°C und weiter vorzugsweise zwischen 98°C und 99°C. Eine solch hohe Rückgewinnung von thermischer Energie aus dem aus der Würzepfanne aufsteigenden Brüdendampf sorgt für eine wirksame Minimierung des Verlustes von thermischer Energie.

Von besonderem Vorteil ist es auch, wenn die Temperatur von aus dem Würzekühler in die innere Zuflussleitung austretendem Wasser während des Braubetriebs der Brauanlage im Bereich von 95°C bis 97°C liegt, vorzugsweise zwischen 96°C und 97° liegt. Auch hierdurch wird eine sehr effiziente Wärmerückgewinnung erzielt.

Besonders vorteilhaft ist es, wenn die Temperatur von aus dem Würzekühler in die innere Zuflussleitung austretendem Wasser während des Braubetriebs der Brauanlage maximal um 2°C, vorzugsweise maximal um 1°C, geringer ist als die Temperatur der in den Würzekühler eintretenden heißen Würze. Hierdurch wird die Wärmerückgesinnung weiter verbessert und der Verlust von thermischer Energie nochmals reduziert,

Bei einer weiteren vorteilhaften Weiterbildung ist die Temperatur von aus der mit dem Frischwasservorrat fluidverbundenen äußeren Zuflussleitung in den Würzekühler eintretendem Wasser wärmer als 0° C und kälter als 10°C, vorzugsweise 6°C oder kälter, weiter vorzugsweise 4°C oder kälter. Hierdurch wird nicht nur besonders viel thermische Energie von dem in den Würzekühler eingeleiteten Frischwasser aufgenommen, sondern die Würze wird auch deutlich stärker herabgekühlt, was für bestimmte Biersorten von Vorteil ist.

Schließlich ist es auch von besonderem Vorteil, wenn die Temperatur von aus dem Hochtemperatur-Wasserauslass der Heißwasser-Speichereinrichtung in den Heißwassereinlass des Maischgefäßes während des Braubetriebs der Brauanlage fließendem Wasser im Hochtemperatur-Wasserauslass im Bereich von 90°C bis 99°C liegt, vorzugsweise 95°C oder höher ist, weiter vorzugsweise 96°C oder höher ist.

In einer vorteilhaften Ausführungsform der Erfindung sind jeweils zumindest ein Hochtemperatur-Wassereinlass und zumindest ein Hochtemperatur-Wasserauslass der Heißwasser-Speichereinrichtung von einem gemeinsamen Hochtemperatur-Wasseranschluss der Heißwasser-Speichereinrichtung gebildet. Ein solcher Hochtemperatur-Wasseranschluss kann somit in beiden Richtungen durchströmt und als Einlass sowie als Auslass genutzt werden. Um verschiedene Füllstände der Heißwasser-Speichereinrichtung berücksichtigen zu können wird der Hochtemperatur-Wasseranschluss vorzugsweise von mehreren in unterschiedlichen Höhen liegenden Tankanschlüssen gespeist, die je nach Füllstand über ein Absperrorgan zu- oder weggeschaltet werden können.

In einer weiteren vorteilhaften Ausführungsform der Erfindung sind jeweils zumindest ein Niedertemperatur-Wassereinlass und zumindest ein Niedertemperatur-Wasserauslass der Heißwasser-Speichereinrichtung von einem gemeinsamen Niedertemperatur-Wasseranschluss der Heißwasser-Speichereinrichtung gebildet. Ein solcher Niedertemperatur-Wasseranschluss kann somit ebenfalls in beiden Richtungen durchströmt und als Einlass sowie als Auslass genutzt werden.

In einer nicht dargestellten Ausführung wird die Wärme des Kondensats über einen zusätzlichen Kondensat-Wärmetauscher zurückgewonnen. Dabei wird die Wärme des heißen Kondensats mittels Kaltwassers zurückgewonnen und Heißwasser mit etwa 80°C erzeugt.

Eine weitere vorteilhafte Ausführung der erfindungsgemäßen Brauanlage mit Frischwasser-Energiespeicher weist zusätzlich eine Niedertemperatur-Primärenergiequelle, beispielsweise eine Hackschnitzel- oder Holzpelletsheizung mit Heizwasser-Endtemperaturen von bis zu 110°C auf. Solche Heizungs-Anlagen unter 110° sind nicht TÜV überwachungspflichtig und werden in der Haustechnik in großen Stückzahlen eingesetzt. Deshalb sind sie relativ kostengünstig im Vergleich zu Hochtemperatur-Heizanlagen. Dabei müsste die Heißwasser-Speichereinrichtung als Druckbehälter ausgestaltet sein. In einem solchen Druckbehälter herrschen dann Kopftemperaturen von 106 °C bis 108 °C vor. Diese "Kopfenergie" könnten dann zur Beheizung für die Würzekochung verwendet werden. Idealerweise ist dafür ein Außenkocher vorgesehen, der als Plattenwärmetauscher oder Rohrbündelwärmetauscher ausgeführt ist.

Eine zusätzlich vorgesehene externe Heizanlage als Primärenergiequelle weist vorzugsweise niedrige Rücklauftemperaturen auf, bei einer idealen Spreizung zwischen Vor- und Rücklauftemperatur von 10 bis 20 Kelvin. Daher sollte die Brauereianlage so betrieben werden, dass sich während ihres Betriebs (zum Beispiel während einer Produktionswoche) auch eine ähnliche oder dieselbe Temperaturspreizung in der Heißwasser-Speichereinrichtung zwischen deren Hochtemperaturbereich und deren Niedertemperaturbereich einstellt. Deshalb ist es vorteilhaft, wenn mit der thermischen Energie aus der Heißwasser-Speichereinrichtung auch andere Verbraucher in der Brauerei beheizt werden, um eine derart breite Temperaturspreizung in der Heißwasser-Speichereinrichtung zu erzielen. Andere Wärmesenken, in denen thermische Energie aus der Heißwasser-Speichereinrichtung genutzt werden kann, sind beispielsweise eine Gebäudebeheizung, Flaschenwaschmaschinen oder Reinigungsanlagen.

Über Sekundär-Wärmetauscher können auch andere Wärmequellen zur Aufheizung der Heißwasser-Speichereinrichtung genutzt werden, zum Beispiel die Abwärme aus der Bierkühlung oder aus der Drucklufterzeugung.

Schließlich ist in der erfindungsgemäßen Brauanlage vorteilhafter Weise auch noch die, vorzugsweise vollständige, Wärmedämmung von Sudgefäßen, insbesondere der Würzepfanne und des Whirlpools, vorgesehen. Auf diese Weise wird eine Brauanlage mit einem umfassenden Energie-Einspar- und Energie-Rückgewinnungs-Konzept geschaffen. Die konsequente Wärmedämmung der Sudgefäße und minimale Wärmeverluste ermöglichen eine Wärmerückgewinnung aus der Heißwürze auf höchstmöglichem Temperaturniveau und damit eine bestmögliche Nutzung der rückgewonnenen Energie. Durch die höhere Temperaturdifferenz wird zur Wärmerückgewinnung auch eine kleinere Menge an Heißwasser benötigt, was vorteilhaft ist, um Heißwasserüberschüsse zu vermeiden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

Vorteilhafter Weise ist der gesamte Heißwasserkreislauf an eine CIP-Reinigungsanlage angeschlossen, damit etwaige Rückstände und Ablagerungen entfernt werden können. Die Heißwasser-Speicherspeichereinrichtung verfügt vorzugsweise über Reinigungsvorrichtungen, wie beispielsweise Spritzköpfe, zur Tankreinigung der Heißwasser-Speichereinrichtung.

### KURZE BESCHREIBUNG DER ZEICHNUNGEN

Es zeigt:
- Fig. 1: Ein vereinfachtes Anlagenschaubild einer bekannten Brauanlage und
- Fig. 2: Ein vereinfachtes Anlagenschaubild einer erfindungsgemäßen Brauanlage.

### DARSTELLUNG VON BEVORZUGTEN AUSFÜHRUNGSBEISPIELEN

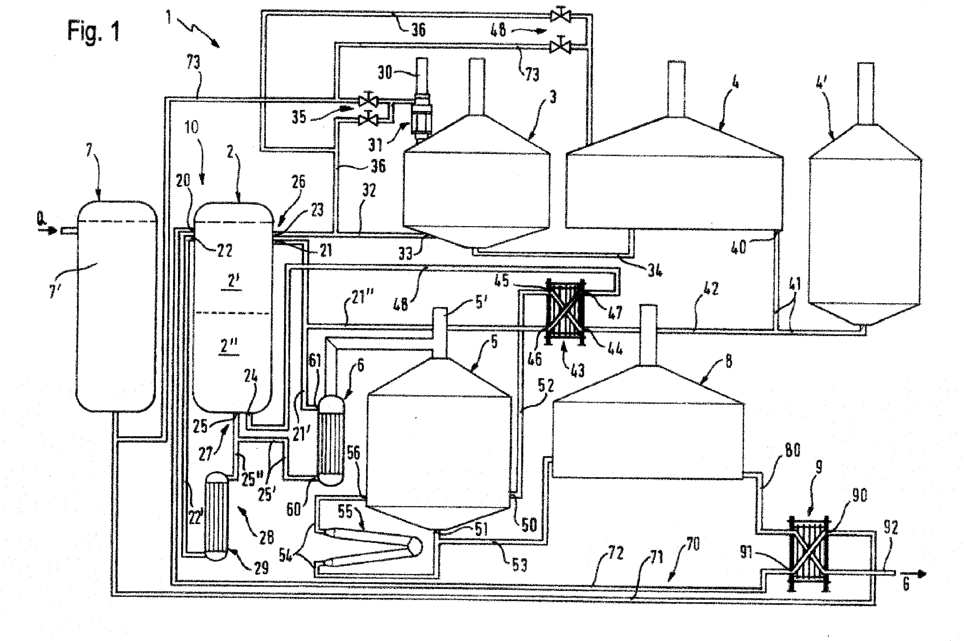

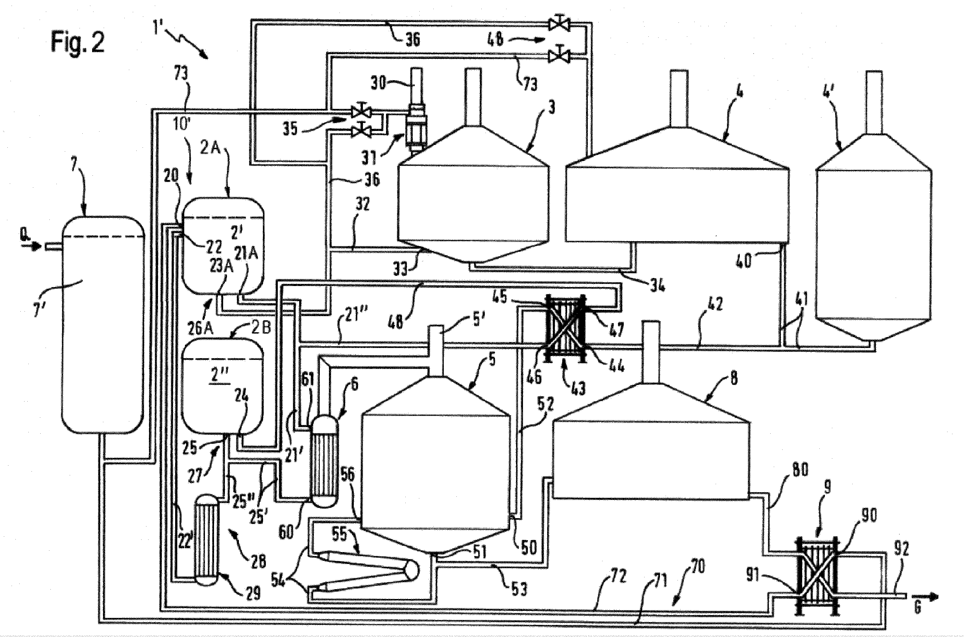

Die Figuren zeigen in vereinfachter schematischer Darstellung ein Anlagenschaubild einer Brauanlage 1, 1' mit einer Heißwasser-Speichereinrichtung 10, 10', wobei nur die wesentlichen apparativen Komponenten der Brauanlage 1, 1' dargestellt sind und nur die für die Beschreibung der Erfindung erforderlichen Fluidverbindungsleitungen gezeigt sind. Die in Fig. 1 dargestellte Brauanlage 1 ist eine bekannte Brauanlage und die in Fig. 2 gezeigte Brauanlage 1' ist eine erfindungsgemäße Brauanlage.

Die Brauanlage 1 aus Fig. 1 weist eine Heißwasser-Speichereinrichtung 10 auf, die von einem Heißwasser-Schichtspeicher 2 gebildet ist, der einen thermischen Energiespeicher der Brauanlage 1 bildet. Des Weiteren sind in Fig. 1 ein Maischgefäß 3, ein Läuterbottich 4, eine Würzepfanne 5 und ein Whirlpool 8 sowie ein Kaltwasserspeicher 7 als wesentliche apparative Komponenten der Brauanlage 1 dargestellt. Der Kaltwasserspeicher 7 ist an eine externe Frischwasserquelle Q angeschlossen, wie es durch den Pfeil Q symbolisiert ist, und bildet einen Pufferspeicher für einen Frischwasservorrat 7'. Zur Erzielung einer möglichst geringen Wasserhärte des Frischwassers ist vorzugsweise zwischen der Frischwasserquelle Q und dem Kaltwasserspeicher 7 eine (nicht gezeigte) Wasserenthärtungsanlage vorgesehen.

Der Heißwasser-Schichtspeicher 2 ist ein Behälter, beispielsweise ein Tank, zur Aufnahme von Wasser mit unterschiedlichen Temperaturschichtungen. Der Heißwasser-Schichtspeicher 2 bildet in seinem oberen Behälterbereich einen Hochtemperaturbereich 2' mit einer heißeren Wasserschicht und in seinem unteren Behälterbereich einen Niedertemperaturbereich 2" mit einer weniger heißen Wasserschicht aus.

Der Heißwasser-Schichtspeicher 2 ist in seinem oberen Behälterbereich mit drei jeweils einen Tankanschluss bildenden Hochtemperatur-Wassereinlässen 20, 21, 22 versehen, durch die Heißwasser in den oberen Bereich des Heißwasser-Schichtspeichers 2 eingeleitet werden kann. Des Weiteren ist im oberen Behälterbereich des Heißwasser-Schichtspeichers 2 ein ebenfalls einen Tankanschluss bildender Hochtemperatur-Wasserauslass 23 vorgesehen, durch den Heißwasser aus dem Heißwasser-Schichtspeicher 2 abgeführt werden kann. Selbstverständlich ist es auch möglich, mehr oder weniger Wassereinlässe oder Wasserauslässe vorzusehen. Ebenso ist es möglich, zumindest einen Wassereinlass und einen Wasserauslass miteinander zu kombinieren, so dass durch einen solchen kombinierten Hochtemperatur-Wasseranschluss 26 sowohl Heißwasser in den Hochtemperaturbereich 2' des Heißwasser-Schichtspeichers 2 eingeleitet als auch Wasser aus diesem entnommen werden kann. Um die verschiedenen Füllstände des Heißwasser-Schichtspeichers 2 zu berücksichtigen, kann der Hochtemperatur-Wasseranschluss 23 vorteilhafter Weise von mehreren in unterschiedlichen Höhen liegenden Tankanschlüssen (Wassereinlass und/oder Wasserauslass) gespeist werden, die je nach Füllstand über ein jeweiliges Absperrorgan zu- oder weggeschaltet werden können.

In dem den Niedertemperaturbereich 2" umfassenden unteren Behälterbereich des Heißwasser-Schichtspeichers 2, vorzugsweise an dessen unterem Boden sind zumindest ein Niedertemperatur-Wassereinlass 24 und zumindest ein Niedertemperatur-Wasserauslass 25 vorgesehen, an den eine erste Niedertemperatur-Fluidleitung 25' und eine zweite Niedertemperatur-Fluidleitung 25" angeschlossen sind und die ebenfalls jeweils einen Tankanschluss bilden. Auch diese können jeweils in einem einzigen Niedertemperatur-Wasseranschluss 27 zusammengefasst sein, so dass dieser kombinierte Niedertemperatur-Wasseranschluss 27 sowohl als Wassereinlass als auch als Wasserauslass dienen kann. Selbstverständlich ist es auch möglich, mehr als zwei Schichtungen im Heißwasser-Schichtspeicher 2 vorzusehen, wobei dann für weitere Schichtungen zusätzliche Wassereinlässe und Wasserauslässe vorgesehen sind.

Aus dem kalten Frischwasservorrat 7' des Kaltwasserspeichers 7 wird Frischwasser durch eine Frischwasserzuleitung 70 dem Heißwasser-Schichtspeicher 2 zugeführt, wobei das kalte Frischwasser zunächst durch eine äußere Zuflussleitung 71 vom Kaltwasserspeicher 7 einem Würzekühler 9 zugeführt wird, der als Wärmetauscher ausgebildet ist. Das durch die äußere Zuflussleitung 71 zugeführte kalte Frischwasser tritt in einen Kaltwassereinlauf 90 des Würzekühlers 9 ein und wird im Wärmetauscher des Würzekühlers 9 durch heiße Würze, die aus dem Whirlpool 8 zum Würzekühler 9 durch eine weiter unten noch beschriebene Würzeabflussleitung 80 zugeführt wird, erhitzt, wobei die Temperatur des Frischwassers am Austritt aus dem Würzekühler 9 im Bereich von 95 °C bis 97 °C liegt oder sogar eine Temperatur von bis zu 99 °C erreichen kann. Dieses heiße Frischwasser verlässt den Würzekühler 9 durch einen Heißwasserauslauf 91 und wird von dort durch eine innere Zuflussleitung 72, die - wie alle Heißwasserleitungen (Hochtemperatur- und Niedertemperatur-Leitungen) der Brauanlage 1 - vorzugsweise durchgehend wärmeisoliert ist, dem Hochtemperatur-Wassereinlass 20 des Heißwasser-Schichtspeichers 2 zugeführt, wo es in den Hochtemperaturbereich 2' eintritt. Dem Heißwasser-Schichtspeicher 2 wird somit während des Braubetriebs der Brauanlage 1 erhitztes Frischwasser zugeführt.

Grundsätzlich ist es auch möglich und wird in der Praxis beim Anfahren der Brauanlage 1 auch so gehandhabt werden, dass zu Beginn eines Betriebszyklus' zunächst kaltes Frischwasser aus dem Frischwasservorrat 7' in den Heißwasser-Schichtspeicher 2 eingeleitet und dann in einem Heizkreislauf 28 zunächst erhitzt wird. Der Heizkreislauf 28 weist dazu eine externe Heizeinrichtung 29 auf, die mit Primärenergie, beispielsweise mit Gas, Heizöl, Hackschnitzel oder Holzpellets, beheizt wird. Die Heizeinrichtung 29 ist über die zweite Niedertemperatur-Fluidleitung 25" mit dem Niedertemperatur-Wasserauslass 25 des Heißwasser-Schichtspeichers 2 und über eine zweite Hochtemperatur-Fluidleitung 22' mit dem Hochtemperatur-Wassereinlass 22 des Heißwasser-Schichtspeichers 2 verbunden. Auf diese Weise kann das aus dem unteren Niedertemperaturbereich 2" des Heißwasser-Schichtspeichers 2 abgezogene Wasser von einer (nicht gezeigten) Pumpe durch die externe Heizeinrichtung 29 und die Hochtemperatur-Fluidleitung 22' zurück in den Hochtemperaturbereich 2' des Heißwasser-Schichtspeichers 2 im Kreislauf geführt werden, so dass sich das ursprünglich in den Heißwasser-Schichtspeicher 2 eingeleitete kalte Frischwasser schnell auf die vorgesehenen Betriebstemperaturen erhitzt.

Kaltes Frischwasser aus dem Frischwasservorrat 7' wird zudem durch eine direkt an den Kaltwasserspeicher 7 angeschlossene oder - wie im gezeigten Beispiel - von der äußeren Zuflussleitung 71 abzweigende Frischwasserleitung 73 einer ersten, dem Maischgefäß 3 zugeordneten Mischeinrichtung 35 und einer zweiten, dem Läuterbottich 4 zugeordneten Mischeinrichtung 48 zugeführt. Durch eine vom Hochtemperatur-Wasserauslass 23 (wie in Fig. 1 gezeigt) oder zum Beispiel von der Hochtemperatur-Fluidleitung 21' mit heißem Frischwasser gespeiste Heißwasserleitung 36 wird der jeweiligen Mischeinrichtung 35, 48 zudem Heißwasser zugeführt. In beiden Mischeinrichtungen wird das kalte Frischwasser mit dem Heißwasser aus dem Heißwasser-Schichtspeicher 2 zum Erzielen der gewünschten Temperatur gemischt.

Dem Maischgefäß 3 vorgeschaltet ist eine Vormaischereinrichtung 31, in die geschrotetes Malz oder andere Stärketräger aus einem (nicht dargestellten) Vorrat durch eine Beschickungsleitung 30 zugeführt werden. In der dem Maischgefäß 3 zugeordneten ersten Mischeinrichtung 35 wird das kalte Frischwasser mit dem heißen Frischwasser zum Erzielen der gewünschten Temperatur gemischt und dieses temperierte Wasser wird der Vormaischeinrichtung 31 zugeleitet. In der Vormaischereinrichtung 31 werden die Stärketräger dann im Durchfluss mit aus der ersten Mischeinrichtung 35 zugeführtem temperiertem Frischwasser (zwischen 35 und 65°C, vorzugsweise über 50°C) zu einer Suspension, der sogenannten Maische, vermischt, die anschließend in das Maischgefäß 3 eingeleitet wird.

Aus dem Maischgefäß 3 wird die Maische durch eine Maischeleitung 34 in den Läuterbottich 4 eingeleitet, wo die Maische geläutert wird. Dazu wird der Malzextrakt im Läuterbottich 4 mit Heißwasser, dem so genanntem Anschwänzwasser, extrahiert, das von der zweiten, dem Läuterbottich 4 zugeordneten Mischeinrichtung 48 aus mit 78 - 80°C in den Läuterbottich 4 zugegeben wird. Die dabei im Läuterbottich 4 gewonnene Läuterwürze wird aus dem Läuterbottich 4 durch einen Läuterwürzeaustritt 40 und eine Läuterwürzeleitung 41 abgeführt und zunächst in einem Läuterwürzebehälter 4' zwischengespeichert.

Insgesamt werden ca. 50% des frischen Brauwassers beim Einmaischen zugeben und die anderen 50% werden im Läuterbottich zugegeben, um nach dem Abziehen der Vorderwürze, den verbleibenden Extrakt aus dem Treberkuchen auszuwaschen. Um hier auch Energie zu sparen, kann der letzte Nachguss mit Kaltwasser erfolgen. Das Kaltwasser verdrängt den letzten Extrakt aus dem Treberkuchen und nutzt die gespeicherte Wärme in den Trebern, weil es nicht durch andere thermische Energiequellen aufgeheizt werden muss, sondern dem Treberkuchen die Wärme entzieht und sich dadurch aufwärmt.

Die Läuterwürze wird aus dem Läuterwürzebehälter 4' oder direkt aus dem Läuterbottich 4 durch die erste Läuterwürzeleitung 41 und einem mit dieser fluidverbundene zweite Läuterwürzeleitung 42 einem Läuterwürze-Erhitzer 43 zugeführt, der ebenfalls als Wärmetauscher ausgebildet ist. Die zugeführte Läuterwürze tritt durch einen Niedertemperatur-Würzeeinlass 44 in diesen Wärmetauscher ein, wird dort erhitzt und tritt aus einem Hochtemperatur-Würzeauslass 45 wieder aus, von wo die erhitzte Läuterwürze durch eine dritte Läuterwürzeleitung 52 zu einem Läuterwürzeeinlass 50 der Würzepfanne 5 geführt wird, durch den sie in die Würzepfanne 5 eintritt. Alternativ kann bei geringer Sudfolge die Läuterwürze auch im Whirlpool 8 gesammelt werden und von dort mit einem Läuterwürze-Erhitzer 43 während des Transfers in die Würzepfanne 5 erhitzt werden.

Die Würzepfanne 5 ist in üblicher Weise mit dem Läuterwürzeeinlass 50, einem Würzeauslass 51 und einem Würzedampf-Kamin 5' versehen, durch den beim Würzekochen entstehender Würzedampf, so genannter Brüden, austritt. Ein als Wärmetauscher ausgebildeter Brüdenkondensator 6 ist in allgemein bekannter Weise der Würzepfanne 5 zugeordnet und mit dem Würzedampf-Kamin 5' fluidverbunden, sodass Brüden in den Brüdenkondensator 6 strömt und dort kondensieren kann, wie es weiter unten noch beschrieben wird. Zum Kochen der Würze ist der Würzepfanne 3 ein nachstehend beschriebener allgemein bekannter Würze-Außenkocher 43 zugeordnet.

Aus dem Würzeauslass 51 der Würzepfanne 5 führt eine Würzeumwälzleitung 54 durch den mit Primärenergie betriebenen Würze-Außenkocher 55 zurück zu einem Heißwürze-Einlass 56 der Würzepfanne. Durch diese Würzeumwälzleitung 54 und den externen Würze-Außenkocher 55 wird die in der Würzepfanne enthaltene und ursprünglich durch die Läuterwürzeleitung 52 in die Würzepfanne 5 eingeleitete vorerhitzte Würze von einer (nicht dargestellten) Umwälzpumpe umgewälzt und dabei vom Würze-Außenkocher 55 weiter auf Kochtemperatur erhitzt. Anstelle dieser externen Umlauferhitzung kann selbstverständlich auch jede andere bekannte Art der Würzeerhitzung, beispielsweise mittels eines Innenkochers oder mittels Wärmetauschern, die in der Wandung der Würzepfanne 5 gelegen sind, vorgesehen sein.

Die aus dem Würzeauslass 51 austretende fertige Würze wird durch eine von der Würzeumwälzleitung 53 abzweigende Würzetransferleitung 53 in den Whirlpool 8 geleitet, wo eine Fest-Flüssig-Abscheidung in allgemein bekannter Weise erfolgt. Die dabei abgetrennte flüssige Phase der Würze, die so genannte Ausschlagwürze, wird aus dem Whirlpool 8 durch die Würzeabflussleitung 80 abgeführt und - wie oben beschrieben - in den Würzekühler 9 eingeleitet. Die aus dem Würzekühler 9 austretende abgekühlte Ausschlagwürze wird dann durch eine Gärkellerleitung 92 aus der Brauanlage 1 abgeführt und beispielsweise in einen (nicht gezeigten) Gärtank G eingeleitet, was durch den Pfeil G symbolisiert ist.

Die Brauanlage 1 wie auch die erfindungsgemäße Brauanlage 1' wird somit im Frischwasserdurchlauf von der Quelle Q bis zum Gärtank G vom Braufluid durchströmt, das vom Frischwasser über die Maische, die Läuterwürze, die Würze, schließlich zur Ausschlagwürze wird, die durch die Gärkellerleitung 92 in den Gärtank G geleitet wird.

Bei der Brauanlage 1 wie auch bei der Brauanlage 1' der Erfindung wird das Temperaturmanagement, insbesondere die Wärmerückgewinnung, mittels des Braufluids durchgeführt, wie es nachstehend beschrieben wird.

Vom Niedertemperatur-Wasserauslass 25 des Heißwasser-Schichtspeichers 2 führt die erste Niedertemperatur-Fluidleitung 25' zu einem Niedertemperatur-Wasseranschluss 60 des der Würzepfanne 5 zugeordneten Brüdenkondensators 6. Im Brüdenkondensator 6 wird aus der Würzepfanne 5 aufsteigender Brüdendampf durch Abkühlung mittels des durch die Niedertemperatur-Fluidleitung 25' zugeführten Wassers mit einer Temperatur von beispielsweise ca. 80 °C abgekühlt und kondensiert, wobei das rückgewonnene Brüdenkondensat verworfen wird. Die Wärme aus dem heißen Brüdenkondensat kann mittels eines nicht dargestellten Kondensatkühlers rückgewonnen werden, um beispielsweise Frischwasser aufzuheizen. Bei diesem Kondensationsprozess im Brüdenkondensator 6 wird das durch die Niedertemperatur-Fluidleitung 25' zugeführte Niedertemperaturwasser erhitzt, beispielsweise auf eine Temperatur zwischen 95 °C und 99 °C. Dieses erhitzte Wasser wird durch eine erste Hochtemperatur-Fluidleitung 21' dem Hochtemperatur-Wassereinlass 21 des Heißwasser-Schichtspeichers 2 zugeführt und dort in den Hochtemperaturbereich 2' eingeleitet.

Der Hochtemperaturbereich 2' des Heißwasser-Schichtspeichers 2 ist, ausgehend von einem Hochtemperatur-Wasserauslass 23 über eine Maischwasserleitung 32 mit dem Maischgefäß 3 fluidverbunden. Die Maischwasserleitung 32 mündet dort in einen Heißwassereinlass 33 am unteren Boden des Maischgefäßes 3, so dass von einer (nicht gezeigten) Pumpe aus dem Hochtemperaturbereich 2' des Heißwasser-Schichtspeichers 2 gefördertes Heißwasser von einer Temperatur, die im Bereich von 90 °C bis 99 °C liegt und vorzugsweise höher als 95 °C ist, von unten in die im Maischgefäß 3 enthaltene Maische eintritt. Dadurch stellt sich in der Maische, deren Ausgangstemperatur deutlich unter der Temperatur des eingeleiteten Heißwassers liegt, eine durch ein im Maischgefäß vorgesehenes Rührwerk bedingte Turbulenz ein, die für eine schnelle Durchmischung des eingeleiteten Heißwassers mit der vorhandenen Maische sorgt, so dass sich in sehr kurzer Zeit eine gleichmäßig in der Maische verteilte Mischtemperatur einstellt, die zwischen der ursprünglichen Maischetemperatur und der Temperatur des eingeleiteten Heißwassers liegt. Auf diese Weise lässt sich die Maische in sehr kurzer Zeit auf ein vorgegebenes Temperaturniveau bringen, das für eine so genannte Maischrast für einen vorgegebenen Zeitraum gehalten werden muss. Da beim Brauen von Bier üblicherweise mehrere so genannte Maischrasten hintereinander mit jeweils höherer Temperatur gefahren werden, wird der Maischprozess - und damit der gesamte Brauprozess - beschleunigt, da durch geeignetes Einleiten von heißem Frischwasser aus dem Hochtemperatur-Schichtspeicher 2 in das Maischgefäß 3 schnell und besonders wirksam eine vorgegebene Rasttemperatur eingestellt werden kann. Diese Temperatureinstellung durch Einleiten von heißem Frischwasser in die Maische ist deutlich reaktionsschneller als das herkömmliche Beheizen des Maischgefäßes 3 mit einer internen oder externen Heizeinrichtung mittels Wärmetauschern, deren Wärmeübertragung in die Maische deutlich träger ist.

Das im Brüdenkondensator 6 erhitzte Frischwasser wird auch als Heizmedium im Läuterwürze-Erhitzer 43 genutzt, indem es durch eine aus der ersten Hochtemperatur-Fluidleitung 21' abzweigende Hochtemperatur-Zweigleitung 21" abgezweigt und zu einem Hochtemperatur-Fluidanschluss 46 des Läuterwürze-Erhitzers 43 als Teilstrom geleitet wird. Das aus dem Läuterwürze-Erhitzer 43 durch einen Niedertemperatur-Fluidauslass 47 austretende und auf eine Temperatur von etwa 80 °C abgekühlte Frischwasser wird durch eine Niedertemperatur-Rückführleitung 48 zum Niedertemperatur-Wassereinlass 24 des Heißwasser-Schichtspeichers 2 geführt und tritt dort in den Niedertemperaturbereich 2" des Heißwasser-Schichtspeichers 2 ein.

Fig. 2 zeigt eine erfindungsgemäße Brauanlage 1', für die im Wesentlichen die vorstehenden Ausführungen zu der Brauanlage 1 aus Fig. 1 zutreffen, wobei allerdings die Heißwasser-Speichereinrichtung 10' von einer Anordnung aus zwei oder mehr separaten Heißwasser-Speicherbehältern 2A und 2B, beispielsweise Tanks, gebildet ist. Gleiche Bezugszeichen in Fig. 2 bezeichnen die gleichen Komponenten der Brauanlage wie in Fig. 1, so dass zur Vermeidung von Wiederholungen nachstehend nur die Unterschiede zwischen den beiden Brauanlagen 1 und 1' beschrieben werden; ansonsten gelten für die Brauanlage 1' die gleichen Ausführungen wie sie vorstehend in Bezug auf die Brauanlage 1 der Fig. 1 beschrieben worden sind.

Ein erster, in Fig. 2 oberer Heißwasser-Speicherbehälter 2A (Hochtemperatur-Heißwasser-Speicherbehälter) bildet in seinem Inneren den Hochtemperaturbereich 2' aus und ein zweiter, in Fig. 2 unterer Heißwasser-Speicherbehälter 2B (Niedertemperatur-Heißwasser-Speicherbehälter) bildet in seinem Inneren den Niedertemperaturbereich 2" aus. Der erste Heißwasser-Speicherbehälter 2A enthält daher ein heißeres Wasservolumen als der zweite Heißwasser-Speicherbehälter 2B, der ein weniger heißes Wasservolumen enthält.

Der erste Heißwasser-Speicherbehälter 2A ist, vorzugsweise in seinem oberen Behälterbereich, mit zwei jeweils einen Tankanschluss bildenden Hochtemperatur-Wassereinlässen 20, 22 versehen, durch die Heißwasser in den ersten Heißwasser-Speicherbehälter 2A, vorzugsweise in dessen oberen Bereich, eingeleitet werden kann. Des Weiteren sind im unteren Behälterbereich zwei weitere Tankanschlüsse 21A, 23A vorgesehen, durch die Heißwasser aus dem ersten Heißwasser-Speicherbehälter 2A abgeführt oder auch in ihn eingeleitet werden kann. Der untere Heißwassereinlass 21A kann alternativ auch im oberen Behälterbereich vorgesehen sein, wie dies im Beispiel der Fig. 1 mit dem Hochtemperatur-Wassereinlass 21 vorgesehen ist.

Auch bei der Ausführungsform gemäß Fig. 2 ist es möglich, mehr oder weniger Wassereinlässe oder Wasserauslässe am ersten Heißwasser-Speicherbehälter 2A vorzusehen. Ebenso ist es möglich, zumindest einen Wassereinlass und einen Wasserauslass miteinander zu kombinieren, so dass durch einen solchen kombinierten Hochtemperatur-Wasseranschluss 26A sowohl Heißwasser in den Hochtemperaturbereich 2' eingeleitet als auch Wasser aus diesem entnommen werden kann. Die die Tankanschlüsse des ersten Heißwasser-Speicherbehälters 2A bildenden Hochtemperatur-Wassereinlässe 20, 22 entsprechen den Hochtemperatur-Wassereinlässen 20, 22 des Hochtemperatur-Schichtspeichers 2 der ersten Ausführungsform und sind auf die gleiche Weise an das Rohrleitungsnetz der Brauanlage angeschlossen wie im Beispiel der Fig. 1. Dasselbe gilt für die unteren Tankanschlüsse des ersten Heißwasser-Speicherbehälters 2A, nämlich den Hochtemperatur-Wasserauslass 23A und den Hochtemperatur-Wassereinlass 21A, die - abgesehen von ihrer Lage - dem Hochtemperatur-Wasserauslass 23 beziehungsweise dem Hochtemperatur-Wassereinlass 21 des Hochtemperatur-Schichtspeichers 2 in Fig. 1 entsprechen.

In dem den Niedertemperaturbereich 2" umfassenden zweiten Heißwasser-Speicherbehälter 2B sind, vorzugsweise an dessen unterem Boden, der zumindest eine Niedertemperatur-Wassereinlass 24 und der zumindest eine Niedertemperatur-Wasserauslass 25 vorgesehen, an den die erste Niedertemperatur-Fluidleitung 25' und die zweite Niedertemperatur-Fluidleitung 25" angeschlossen sind und die ebenfalls jeweils einen Tankanschluss bilden. Auch diese können jeweils in dem kombinierten Niedertemperatur-Wasseranschluss 27 zusammengefasst sein, so dass dieser sowohl als Wassereinlass als auch als Wasserauslass dienen kann. Der zumindest eine Niedertemperatur-Wassereinlass 24 kann alternativ auch im oberen Bereich des zweiten Heißwasser-Speicherbehälters 2B vorgesehen sein.

Der auch hier einen Tankanschluss des zweiten Heißwasser-Speicherbehälters 2B bildende zumindest eine Niedertemperatur-Wassereinlass 24 entspricht dem zumindest einen Niedertemperatur-Wassereinlass 24 des Hochtemperatur-Schichtspeichers 2 der ersten Ausführungsform. Ebenso entspricht der zumindest eine Niedertemperatur-Wasserauslass 25 des zweiten Heißwasser-Speicherbehälters 2B dem Niedertemperatur-Wasserauslass 25 des Hochtemperatur-Schichtspeichers 2 der ersten Ausführungsform gemäß Fig. 1. Der zumindest eine Niedertemperatur-Wassereinlass 24 und der zumindest eine Niedertemperatur-Wasserauslass 25 des zweiten Heißwasser-Speicherbehälters 2B sind somit auf die gleiche Weise an das Rohrleitungsnetz der Brauanlage angeschlossen wie im Beispiel der Fig. 1.

Die Funktionsweise der Heißwasser-Speichereinrichtung 10' gemäß der zweiten Ausführungsform entspricht in analoger Weise der Funktionsweise der Heißwasser-Speichereinrichtung 10 gemäß der ersten Ausführungsform, wobei der erste Heißwasser-Speicherbehälter 2A mit dem Hochtemperaturbereich 2' dem oberen Teil des Heißwasser-Schichtspeichers 2 mit dem Hochtemperaturbereich 2' entspricht und wobei der zweite Heißwasser-Speicherbehälter 2B mit dem Niedertemperaturbereich 2" dem unteren Teil des Heißwasser-Schichtspeichers 2 mit dem Niedertemperaturbereich 2" entspricht.

Auch andere in den Schaubildern der Fig. 1 und Fig. 2 nicht gezeigte Wärmeerzeuger und Wärmeverbraucher können, beispielsweise direkt oder über Wärmetauscher, in den anfänglich von zugeführtem Frischwasser gebildeten Braufluidstrom eingebunden werden. In der Brauanlage 1, 1' der vorliegenden Erfindung wird folglich das Braufluid auch gleichzeitig als Wärmetransportmedium genutzt, so dass im Gegensatz zum Stand der Technik kein gesonderter Fluidkreislauf für die Rückgewinnung thermischer Energie erforderlich ist.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Brauanlage
- 1': Brauanlage
- 2: Heißwasser-Schichtspeicher
- 2A: erster Heißwasser-Speicherbehälter
- 2B: zweiter Heißwasser-Speicherbehälter
- 2': Hochtemperaturbereich
- 2": Niedertemperaturbereich
- 3: Maischgefäß
- 4: Läuterbottich
- 4': Läuterwürzebehälter
- 5: Würzepfanne
- 5': Würzedampf-Kamin
- 6: Brüdenkondensator
- 7: Kaltwasserspeicher
- 7': Frischwasservorrat
- 8: Whirlpool
- 9: Würzekühler
- 10: Heißwasser-Speichereinrichtung
- 10': Heißwasser-Speichereinrichtung
- 20: Hochtemperatur-Wassereinlass
- 21: Hochtemperatur-Wassereinlass
- 21': Hochtemperatur-Fluidleitung
- 21": Hochtemperatur-Zweigleitung
- 21A: Hochtemperatur-Wassereinlass
- 22: Hochtemperatur-Wassereinlass
- 22': Hochtemperatur-Fluidleitung
- 23: Hochtemperatur-Wasserauslass
- 23A: Hochtemperatur-Wasserauslass
- 24: Niedertemperatur-Wassereinlass
- 25: Niedertemperatur-Wasserauslass
- 25': Niedertemperatur-Fluidleitung
- 25": Niedertemperatur-Fluidleitung
- 26: Hochtemperatur-Wasseranschluss
- 26A: Hochtemperatur-Wasseranschluss
- 27: Niedertemperatur-Wasseranschluss
- 28: Heizkreislauf
- 29: Heizeinrichtung
- 32: Maischwasserleitung
- 33: Heißwassereinlass
- 34: Maischeleitung
- 35: erste Mischeinrichtung
- 36: Heißwasserleitung
- 40: Läuterwürzeaustritt
- 41: erste Läuterwürzeleitung
- 42: zweite Läuterwürzeleitung
- 43: Läuterwürze-Erhitzer
- 44: Niedertemperatur-Würzeeinlass
- 45: Hochtemperatur-Würzeauslass
- 46: Hochtemperatur-Fluidanschluss
- 47: Niedertemperatur-Fluidauslass
- 48: zweite Mischeinrichtung
- 50: Läuterwürzeeinlass
- 51: Würzeauslass
- 52: dritte Läuterwürzeleitung
- 53: Würzetransferleitung
- 60: Niedertemperatur-Wasseranschluss
- 61: Hochtemperatur-Wasseranschluss
- 70: Frischwasser-Zuleitung
- 71: äußere Zuflussleitung
- 72: innere Zuflussleitung
- 73: Frischwasserleitung
- 80: Würzeabflussleitung
- 90: Kaltwassereinlauf
- 91: Heißwasserauslauf
- 92: Gärkellerleitung

- G: Gärtank
- Q: Frischwasserquelle

## Patentansprüche

1. Brauanlage mit einer einen Hochtemperaturbereich (2') und einen Niedertemperaturbereich (2") aufweisenden Heißwasser-Speichereinrichtung (10'), die zumindest einen Hochtemperatur-Wassereinlass (20, 21A, 22), zumindest einen Hochtemperatur-Wasserauslass (23A), zumindest einen Niedertemperatur-Wassereinlass (24) und zumindest einen Niedertemperatur-Wasserauslass (25) aufweist, mit einem Maischgefäß (3), einem mit dem Maischgefäß (3) über eine Maischeleitung (34) fluidverbundenen Läuterbottich (4) oder Maischefilter, einer Würzepfanne (5), die einen Läuterwürzeeinlass (50), einen Würzeauslass (51) und einen Brüdenkondensator (6) mit einem Niedertemperatur-Wasseranschluss (60) und einem Hochtemperatur-Wasseranschluss (61) aufweist, wobei der Läuterwürzeeinlass (50) über eine Läuterwürzeleitung (52) mittelbar oder unmittelbar mit dem Läuterbottich (4) oder dem Maischefilter fluidverbunden ist, wobei der Niedertemperatur-Wasserauslass (25) der Heißwasser-Speichereinrichtung (10') mit dem Niedertemperatur-Wasseranschluss (60) des Brüdenkondensators (6) und der Hochtemperatur-Wassereinlass (21) der Heißwasser-Speichereinrichtung (10') mit dem Hochtemperatur-Wasseranschluss (61) des Brüdenkondensators (6) in Fluidverbindung stehen,
**dadurch gekennzeichnet,**
**dass** die Heißwasser-Speichereinrichtung (10') zumindest einen ersten Heißwasser-Speicherbehälter (2A), der den Hochtemperaturbereich (2') aufweist oder bildet, und zumindest einen zweiten Heißwasser-Speicherbehälter (2B) umfasst, der den Niedertemperaturbereich (2") aufweist oder bildet und
**dass** die als Anordnung von zwei oder mehr Heißwasser-Speicherbehältern (2A, 2B) ausgeführte Heißwasser-Speichereinrichtung (10') über eine Frischwasser-Zuleitung (70) mit einem Frischwasservorrat (7') in Fluidverbindung steht und dass der Hochtemperatur-Wasserauslass (23A) der Heißwasser-Speichereinrichtung (10') über eine Maischwasserleitung (32) mit einem Heißwassereinlass (33) des Maischgefäßes (3) in Fluidverbindung steht.

2. Brauanlage mit einer einen Hochtemperaturbereich (2') und einen Niedertemperaturbereich (2") aufweisenden Heißwasser-Speichereinrichtung (10'), die zumindest einen Hochtemperatur-Wassereinlass (20, 21A, 22), zumindest einen Hochtemperatur-Wasserauslass (23A), zumindest einen Niedertemperatur-Wassereinlass (24) und zumindest einen Niedertemperatur-Wasserauslass (25) aufweist, mit einem Maischgefäß (3), einem mit dem Maischgefäß (3) über eine Maischeleitung (34) fluidverbundenen Läuterbottich (4) oder Maischefilter, einer Würzepfanne (5), die einen Läuterwürzeeinlass (50), einen Würzeauslass (51) und einen Brüdenkondensator (6) mit einem Niedertemperatur-Wasseranschluss (60) und einem Hochtemperatur-Wasseranschluss (61) aufweist, wobei der Läuterwürzeeinlass (50) über eine Läuterwürzeleitung (52) mittelbar oder unmittelbar mit dem Läuterbottich (4) oder dem Maischefilter fluidverbunden ist, wobei der Würzeauslass (51) mittelbar oder unmittelbar mit einem Würzekühler (9) fluidverbunden ist, dem über eine äußere Zuflussleitung (71) Kaltwasser zu einem Kaltwassereinlauf (90) zugeführt wird, das im Würzekühler (9) erhitzt wird, und der einen über eine innere Zuflussleitung (72) mit dem Hochtemperatur-Wassereinlass (20) der Heißwasser-Speichereinrichtung (10') fluidverbundenen Heißwasserauslauf (91) zum Austritt des erhitzten Wassers aufweist,
**dadurch gekennzeichnet,**
**dass** die Heißwasser-Speichereinrichtung (10') zumindest einen ersten Heißwasser-Speicherbehälter (2A), der den Hochtemperaturbereich (2') aufweist oder bildet, und zumindest einen zweiten Heißwasser-Speicherbehälter (2B) umfasst, der den Niedertemperaturbereich (2") aufweist oder bildet und
**dass** die äußere Zuflussleitung (71) mit dem Frischwasservorrat (7') fluidverbunden ist und dass die äußere Zuflussleitung (71) und die innere Zuflussleitung (72) die Frischwasser-Zuleitung (70) der als Anordnung von zwei oder mehr Heißwasser-Speicherbehältern (2A, 2B) ausgeführten Heißwasser-Speichereinrichtung (10') bilden.

3. Brauanlage mit einer einen Hochtemperaturbereich (2') und einen Niedertemperaturbereich (2") aufweisenden Heißwasser-Speichereinrichtung (10'), die zumindest einen Hochtemperatur-Wassereinlass (20, 21A, 22), zumindest einen Hochtemperatur-Wasserauslass (23A), zumindest einen Niedertemperatur-Wassereinlass (24) und zumindest einen Niedertemperatur-Wasserauslass (25) aufweist, mit einem Maischgefäß (3), einem mit dem Maischgefäß (3) über eine Maischeleitung (34) fluidverbundenen Läuterbottich (4) oder Maischefilter, einer Würzepfanne (5), die einen Läuterwürzeeinlass (50), einen Würzeauslass (51) und einen Brüdenkondensator (6) mit einem Niedertemperatur-Wasseranschluss (60) und einem Hochtemperatur-Wasseranschluss (61) aufweist, wobei der Läuterwürzeeinlass (50) über eine Läuterwürzeleitung (52) mittelbar oder unmittelbar mit dem Läuterbottich (4) oder dem Maischefilter fluidverbunden ist, wobei der Niedertemperatur-Wasserauslass (25) der Heißwasser-Speichereinrichtung (10') mit dem Niedertemperatur-Wasseranschluss (60) des Brüdenkondensators (6) und der Hochtemperatur-Wassereinlass (21) der Heißwasser-Speichereinrichtung (10') mit dem Hochtemperatur-Wasseranschluss (61) des Brüdenkondensators (6) in Fluidverbindung stehen, wobei der Würzeauslass (51) mittelbar oder unmittelbar mit einem Würzekühler (9) fluidverbunden ist, dem über eine äußere Zuflussleitung (71) Kaltwasser zu einem Kaltwassereinlauf (90) zugeführt wird, das im Würzekühler (9) erhitzt wird, und der einen über eine innere Zuflussleitung (72) mit dem Hochtemperatur-Wassereinlass (20) der Heißwasser-Speichereinrichtung (10') fluidverbundenen Heißwasserauslauf (91) zum Austritt des erhitzten Wassers aufweist,
**dadurch gekennzeichnet,**
**dass** die Heißwasser-Speichereinrichtung (10') zumindest einen ersten Heißwasser-Speicherbehälter (2A), der den Hochtemperaturbereich (2') aufweist oder bildet, und zumindest einen zweiten Heißwasser-Speicherbehälter (2B) umfasst, der den Niedertemperaturbereich (2") aufweist oder bildet,
**dass** die als Anordnung von zwei oder mehr Heißwasser-Speicherbehältern (2A, 2B) ausgeführte Heißwasser-Speichereinrichtung (10') über eine Frischwasser-Zuleitung (70) mit einem Frischwasservorrat (7') in Fluidverbindung steht und dass der Hochtemperatur-Wasserauslass (23A) der Heißwasser-Speichereinrichtung (10') über eine Maischwasserleitung (32) mit einem Heißwassereinlass (33) des Maischgefäßes (3) in Fluidverbindung steht und
**dass** die äußere Zuflussleitung (71) mit dem Frischwasservorrat (7') fluidverbunden ist und dass die äußere Zuflussleitung (71) und die innere Zuflussleitung (72) die Frischwasser-Zuleitung (70) der Heißwasser-Speichereinrichtung (10') bilden.

4. Brauanlage nach Anspruch 1, 2 oder 3,
**dadurch gekennzeichnet,**
**dass** die Temperatur von aus dem Hochtemperatur-Wasseranschluss (61) des Brüdenkondensators (6) austretendem Wasser während des Braubetriebs der Brauanlage (1) im Bereich von 95°C bis 99°C liegt, vorzugsweise zwischen 96°C und 99°C und weiter vorzugsweise zwischen 98°C und 99°C liegt.

5. Brauanlage nach einem der Ansprüche 2 bis 4,
**dadurch gekennzeichnet,**
**dass** die Temperatur von aus dem Würzekühler (9) in die innere Zuflussleitung (72) austretendem Wasser während des Braubetriebs der Brauanlage im Bereich von 95°C bis 97°C liegt, vorzugsweise zwischen 96°C und 97° liegt.

6. Brauanlage nach einem der Ansprüche 2 bis 5,
**dadurch gekennzeichnet,**
**dass** die Temperatur von aus dem Würzekühler (9) in die innere Zuflussleitung (72) austretendem Wasser während des Braubetriebs der Brauanlage maximal um 2°C, vorzugsweise maximal um 1°C, geringer ist als die Temperatur der in den Würzekühler (9) eintretenden heißen Würze ist.

7. Brauanlage nach einem der Ansprüche 2 bis 6,
**dadurch gekennzeichnet,**
**dass** die Temperatur von aus der mit dem Frischwasservorrat (7') fluidverbundenen äußeren Zuflussleitung (71) in den Würzekühler (9) eintretendem Wasser wärmer als 0° C und kälter als 10°C, vorzugsweise 6°C oder kälter ist, weiter vorzugsweise 4°C oder kälter ist.

8. Brauanlage nach einem der vorhergehenden Ansprüche,
**dadurch gekennzeichnet,**
**dass** die Temperatur von aus dem Hochtemperatur-Wasserauslass (23A) der Heißwasser-Speichereinrichtung (10') in den Heißwassereinlass (33) des Maischgefäßes (3) während des Braubetriebs der Brauanlage fließendem Wasser im Hochtemperatur-Wasserauslass (23) im Bereich von 90°C bis 99°C liegt, vorzugsweise 95°C oder höher ist, weiter vorzugsweise 96°C oder höher ist.

9. Brauanlage nach einem der vorhergehenden Ansprüche,
**dadurch gekennzeichnet,**
**dass** jeweils zumindest ein Hochtemperatur-Wassereinlass (21A) und zumindest ein Hochtemperatur-Wasserauslass (23A) der Heißwasser-Speichereinrichtung (10') von einem gemeinsamen Hochtemperatur-Wasseranschluss (26A) der Heißwasser-Speichereinrichtung (10') gebildet sind.

10. Brauanlage nach einem der vorhergehenden Ansprüche,
**dadurch gekennzeichnet,**
**dass** jeweils zumindest ein Niedertemperatur-Wassereinlass (24) und zumindest ein Niedertemperatur-Wasserauslass (25) der Heißwasser-Speichereinrichtung (10') von einem gemeinsamen Niedertemperatur-Wasseranschluss (27) der Heißwasser-Speichereinrichtung (10') gebildet sind.
